# EUROPÄISCHE PATENTSCHRIFT

(11) **EP 3 710 724 B1**
(45) Veröffentlichungstag und Bekanntmachung des Hinweises auf die Patenterteilung: **05.01.2022**
(21) Anmeldenummer: 18800876.7
(22) Anmeldetag: 05.11.2018
(51) Int. Cl.: F16G 13/06, B21L 9/00, B21L 9/02

(54) **ANTRIEBSANORDNUNG FÜR EIN ZWEIRAD**
DRIVE ASSEMBLY FOR A TWO-WHEELED VEHICLE
SYSTÈME D'ENTRAÎNEMENT POUR DEUX-ROUES

(30) Priorität: 13.11.2017 DE 102017220152
(43) Veröffentlichungstag der Anmeldung: 23.09.2020
(73) Patentinhaber: Bayerische Motoren Werke Aktiengesellschaft, 80809 München (DE); Fraunhofer-Gesellschaft zur Förderung der angewandten Forschung e.V., 80686 München (DE)
(72) Erfinder: WETZEL, Franz-Josef, 82216 Gernlinden (DE); GROETZKI, Sascha, 86153 Augsburg (DE); MATHERN, Lionel, 85221 Dachau (DE); WEIHNACHT, Volker, 01309 Dresden (DE); LESON, Andreas, 01328 Dresden (DE)
(74) Vertreter: Pfenning, Meinig & Partner mbB
(86) Internationale Anmeldenummer: PCT/EP2018/080163
(87) Internationale Veröffentlichungsnummer: WO 2019/091913

(56) Entgegenhaltungen:
- DE-A1-102006 024 433
- DE-A1-102006 052 869
- DE-A1-102008 022 039
- JP-A- 2005 291 349

## Beschreibung

Die Erfindung betrifft eine Antriebsanordnung für ein Zweirad, insbesondere ein leistungsstarkes Motorrad, bei der eine geschlossene Kette um ein Antriebsritzel und ein Kettenrad für den Abtrieb geführt ist und die Kette mit Bolzen, auf denen jeweils eine um die mittlere Längsachse des jeweiligen Bolzes drehbaren Hülse und auf den Hülsen jeweils eine Rolle, die um die Hülse drehbar angeordnet und mit einem Spiel behaftet ist, und dabei an zwei gegenüberliegenden Stirnseiten die Bolzen mit Laschen jeweils miteinander verbunden sind, gebildet ist.

Die Bolzen, Hülsen, Rollen und Laschen können in herkömmlicher Form aus Stahl als Basiswerkstoff hergestellt werden.

Ketten mit denen Zweiradfahrzeuge angetrieben werden, erfordern üblicherweise eine regelmäßige Wartung und Pflege, was insbesondere das Reinigen, Schmieren und Spannen der Kette betrifft. Insbesondere bei leistungsstarken Zweirädern ist eine Schmierung der Kette in kurzen Intervallen - also in Abständen von lediglich mehreren hundert Kilometern - erforderlich, um eine ausreichend große Lebensdauer zu erzielen. Schmierstoff für eine Schmierung muss dabei aufwändig eingebracht werden. In der Regel macht dies im privaten Umfeld einen geeigneten Werkstatt- oder zumindest einen Hofbereich sowie ggf. einen Werkstattbesuch erforderlich. Dies trifft auch auf das Spannen der Kette zu. Dies ist für einen Nutzer eines Zweirades lästig, da dies mit Verlust an Freizeit, zusätzlichen Kosten, schmutzigen Händen und Verschmutzungen am Zweirad verbunden ist.

Für kürzere Intervalle (300 - 600 km) wird von den Herstellern eine Schmierung mit Hilfe von Sprays vorgeschlagen und gefordert. Dabei ist die Wirksamkeit zeitlich begrenzt und es treten Verunreinigungen durch das aufgesprühte Schmiermittel am Fahrzeug auf, welches fliehkraftbedingt abgeschleudert wird, was den ästhetischen Gesamteindruck negativ beeinträchtigt und/oder häufige Reinigungsprozeduren erforderlich macht.

Die Wirksamkeit dieser Schmiermittel wird durch Feuchtigkeit und Schmutz nachteilig beeinflusst. Insbesondere am Schmierstoff anhaftender Straßenschmutz spielt für einen erhöhten Verschleiß eine besondere Rolle.

Aus DE 10 2006 024 433 A1 ist es daher bekannt, verschleißmindernde harte Schichten auf Teile einer Kette aufzubringen. Dabei wird u.a. auch diamant-ähnlicher Kohlenstoff in Form von ta-C genannt. Bekanntermaßen weist ta-C eine sehr hohe Härte auf, was sich normalerweise bei auf Reibung beanspruchten Reibpartnern nachteilig auswirkt. Dies berücksichtigend wurde es vorgeschlagen, die Oberflächen beider Reibpartner entsprechend mit diamantähnlichem Kohlenstoff zu beschichten. Bei den in Rede stehenden Zweirädern müssten also die auf Reibung beanspruchten Oberflächen des jeweiligen Ritzels und Ketterads so beschichtet werden, was wegen deren äußeren Konturen sehr aufwändig und kostenintensiv ist.

So ist aus DE 10 2006 024 433 A1 eine verschleißfeste Kette mit Verschleißschutzbeschichtung bekannt.

DE 10 2006 052 869 A1 betrifft eine PVD-Hartstoffbeschichtung von Kettengliedern.

Eine Verschleißschutzbeschichtung für auf Reibung beanspruchte Oberflächen von Bauteilen sowie ein Verfahren zur Ausbildung geht aus DE 10 2008 022 039 A1 hervor.

In JP 2005 291349 A ist eine Rollenkette offenbart.

Es ist daher Aufgabe der Erfindung, Möglichkeiten für die Reduzierung des Reibverschleißes an einer Antriebsanordnung mit Kette, Ritzel sowie Kettenrad anzugeben, die zu einem erheblich reduzierten Pflege- und Wartungsaufwand führen und ggf. auch den Reibungswiderstand reduzieren, anzugeben.

Erfindungsgemäß wird diese Aufgabe mit einer Antriebsanordnung, die die Merkmale des Anspruchs 1 aufweist, gelöst. Vorteilhafte Ausgestaltungen und Weiterbildungen der Erfindung können mit in untergeordneten Ansprüchen bezeichneten Merkmalen realisiert werden.

Bei der erfindungsgemäßen Antriebsanordnung für ein Zweirad ist eine geschlossene Kette um ein Antriebsritzel und ein Kettenrad für den Abtrieb geführt. Die Kette ist mit Bolzen, Hülsen, Rollen und Laschen gebildet. Auf den Bolzen ist jeweils eine um die mittlere Längsachse des jeweiligen Bolzes drehbare Hülse angeordnet. Auf die Hülsen ist jeweils eine Rolle aufgeschoben, die um die Hülse drehbar angeordnet und mit einem Spiel behaftet ist. An zwei gegenüberliegenden Stirnseiten sind die Bolzen mit Laschen jeweils miteinander verbunden. Die äußere Oberfläche der Hülsen und der Rollen ist jeweils mit einer Beschichtung aus reinem ta-C beschichtet. In den Beschichtungen sind keine weiteren chemischen Elemente außer Kohlenstoff, bis auf die herstellungsbedingt bei einem PVD-Verfahren, mit dem die Beschichtungen ausgebildet worden sind, unvermeidbaren Spurenelemente, enthalten.

An der Oberfläche der Beschichtungen soll eine Rₐ-Rauheit zwischen 0,03 um und 0,2 µm und/oder eine R_{z}-Rauheit zwischen 0,3 µm bis 2 µm eingehalten sein. Bei der erfindungsgemäßen Antriebsanordnung weisen die mit den Rollen der Kette in Kontakt stehenden Oberflächen des Ritzels und des Kettenrades keine Beschichtung aus diamantähnlichem Kohlenstoff auf.

Die Hülsen und Rollen sind also hohlzylindrisch ausgebildet und mit ihren Innen- bzw. Außendurchmessern auch unter Berücksichtigung der Außendurchmesser der Bolzen so hohlzylindrisch ausgebildet, dass eine für eine Rotation geeignete Spielpassung gegeben ist.

Es hat sich als überraschend herausgestellt, dass allein durch die Kombination der reinen ta-C-Beschichtungen auf den äußeren Mantelflächen von Hülsen und Rollen in Kombination mit der geforderten Oberflächengüte die Reibeigenschaften so vorteilhaft beeinflusst werden können, dass auf weitere zusätzliche Maßnahmen verzichtet werden kann. Lediglich eine dauerhaft wirkende Schmierung, auf die nachfolgend noch zurück zu kommen sein wird, kann sich dabei mit geringem zusätzlichem Aufwand positiv auswirken.

Vorteilhaft sollte an der Oberfläche der Beschichtungen eine Rₐ-Rauheit zwischen 0,05 µm und 0,15 µm. und/oder eine R_{z}-Rauheit zwischen 0,5 µm und 1,5 µm, eingehalten sein.

Die ta-C-Beschichtungen sollten eine Schichtdicke aufweisen, die eine geschlossene Oberfläche aufweisen, die auch im Anschluss an eine nachfolgend durchgeführte Glättung der Oberflächen der ta-C-Beschichtungen eine geschlossene Schicht gewährleistet.

Die Schichtdicke der ta-C-Beschichtungen auf der äußeren Oberfläche von Hülsen sollte größer als auf den äußeren Oberflächen von Rollen sein. Bevorzugt sollte sie mindestens zweifach so groß sein.

Die ta-C-Beschichtungen können auf einer Haft- oder Zwischenschicht, die auf den mit ta-C-Beschichtungen zu versehenden Oberflächen der Hülsen und Rollen vor der Ausbildung der ta-C-Beschichtungen ausgebildet worden ist, aufgebracht werden.

Die ta-C-Beschichtungen sollen mit einem PVD-Verfahren ausgebildet werden. Wegen der relativ hohen und gleichmäßigen Abscheideraten und der Vermeidung von in ta-C-Schichten enthaltenem Wasserstoff haben sich diese Verfahren bewährt. Es ist insbesondere das als Laser-Arc-Verfahren bekannte PVD-Verfahren für die Ausbildung der ta-C-Beschichtungen geeignet, bei dem ein gepulst betriebener und mit gepulst betriebenen Laserstrahl gezündeter elektrischer Lichtbogen auf einem Kohlenstofftarget gezündeter elektrischer Lichtbogen genutzt wird.

In einer Ausführungsform können zwischen den beiden stirnseitigen Enden der Hülsen und den an den Bolzen angreifenden Laschen jeweils ein Dichtring, auf den jeweiligen Bolzen aufgeschoben, angeordnet sein. Die Dichtringe sollten mit einer reibungsmindernden außenseitigen Beschichtung versehen oder aus einem reibungsmindernden Werkstoff gebildet sein.

Mit den Dichtringen kann ein nahezu vollständig geschlossener Raum zwischen den äußeren Mantelflächen der Hülsen und der inneren Wandung der Rollen erhalten werden, der durch das Spiel dieser Paarung in seiner Dimensionierung beeinflusst ist.

Eine reibungsmindernde Beschichtung oder ein reibungsmindernder Werkstoff kann insbesondere PTFE sein.

Die reibungsmindernde Wirkung wirkt sich auf die mögliche Reduzierung von Reibverlusten vorteilhaft auf den Wirkungsgrad beim Betrieb des jeweiligen Zweirades aus. Außerdem wird der Verschleiß reduziert, so dass die Dichtwirkung verlängert, der Verlust von Schmierstoff sowie der Verschleiß an den Dichtringen, Laschen, und Hülsen reduziert werden können.

Vorteilhaft kann zwischen den äußeren Oberflächen der Bolzen, den inneren Oberflächen der Hülsen und den Dichtringen ein Schmierstoff enthalten sein. Der jeweilige Schmierstoff und die jeweilige zwischen Hülse und Rolle enthaltene Schmierstoffmenge können so gewählt werden, dass eine ausreichende Schmierung über die gesamte Länge eines vom Zweiradhersteller vorgegebenen Inspektionsintervalls gewährleistet werden kann. Mit dem Schmierstoff kann auch einer Korrosion u.a. der Rolleninnenseite entgegengewirkt werden.

Es liegt auf der Hand, dass das Volumen für die Aufnahme von Schmierstoff-Molekülen zwischen der äußeren Mantelfläche eines Bolzens und der inneren Oberfläche einer hohlzylindrischen Hülse, das an den äußeren Stirnseiten von Dichtringen begrenzt ist, relativ klein ist, so dass Schmierstoff nur mit einem entsprechend kleinen Volumen dort eingebracht und zur Schmierung sowie zum Schutz vor Korrosion genutzt werden kann. Trotzdem ist das so nutzbare Schmierstoffvolumen in Verbindung mit den geglätteten Oberflächen der ta-C-Beschichtungen ausreichend groß, um eine ausreichend große wartungsfreie Betriebsdauer, ohne zusätzliche Maßnahmen zwischen den ohnehin erforderlichen Inspektionsintervallen oder anderen Wartungs-oder Reparaturarbeiten, wie z.B. Öl- oder Räderwechsel, zu erreichen. Ein Einbringen von Schmierstoff bei zusammengebauter Kette ist, wenn überhaupt nur schwer und begrenzt möglich. In der Regel reicht eine erste Initialschmierung bei der Fertigstellung einer erfindungsgemäßen Antriebsanordnung bis zu einer ersten erforderlichen Inspektion oder einer anderen Wartung des Zweirades in einer Fachwerkstatt aus, bei der dann ein für Antriebsketten geeigneter Hülsen/Rollen/Dichtring/Laschen-Schmierstoff vom Fachpersonal aufgebracht und dabei deren Schlitze vollgefüllt werden können. Der jeweilige Fahrer des Zweirades muss die bisher üblichen Nachschmierungen in regelmäßigen kurzen Abständen bei Einsatz der Erfindung nicht mehr durchführen, um eine ausreichend große Gesamtlebensdauer, insbesondere der Kette einer erfindungsgemäßen Antriebsanordnung, zu erreichen.

Die Intervalle in denen eine Nachschmierung oder eine andere Wartung an der Antriebsanordnung erforderlich sind, können bis auf 10.000 km und mehr erhöht werden, ohne dass dazwischen zusätzliche Maßnahmen durchgeführt werden müssen.

In einer vorteilhaften Ausführungsform können die Oberflächen der Laschen mit einer vor Korrosion und Verschleiß schützenden Beschichtung versehen oder der Werkstoff der Laschen im oberflächennahen Bereich so modifiziert sein. Eine Beschichtung sollte jedoch nicht mit diamantähnlichem Kohlenstoff gebildet sein.

Die Oberfläche der vor Korrosion und Verschleiß schützenden Beschichtung an Laschen kann mit Stickstoff, Bor oder Phosphor modifiziert oder die vor Korrosion und Verschleiß schützende Beschichtung mit einer Nitrid- und/oder Phosphatverbindung, insbesondere mit Nickelphosphat gebildet sein.

Eine modifizierte Oberfläche kann beispielsweise mit TiN oder AIN gebildet sein. Dabei kann das jeweilige Nitrid mit einem Oberflächenmodifizierungsprozess, bei dem eine Nitrierung auf an sich bekannte Art und Weise erreicht werden kann, erfolgen.

Eine beschichtete oder modifizierte Oberfläche der Laschen kann auch den ästhetischen Eindruck verbessern. Dies kann nicht nur durch den Wegfall, des bei herkömmlichen Kettenantrieben auf der Oberfläche der Kettenglieder vorhandenen in der Regel verschmutzten schwarzen Schmierfilms, sondern auch durch erreichbare Farbeffekte, beispielsweise durch silber- oder goldfarbenes Glänzen erreicht werden. Es ist aber ggf. auch eine farbliche Anpassung an die Farbgebung der Verkleidung oder anderer von außen sichtbarer Anbauteile eines Zweirades möglich.

Dieser visuell sichtbare Effekt kann dauerhaft erhalten bleiben und wird auch nicht während des Betriebes wesentlich nachteilig verändert.

Insbesondere eine Nickel-Phosphat-Beschichtung kann die Laschen wirksam gegen Verschleiß und Korrosion schützen, die chemische Beständigkeit, Maßhaltigkeit, Gleitverhalten verbessern und elektrische Leitfähigkeit sowie die Härte erhöhen. Die Beschichtung kann konturentreu und gleichmäßig an der Oberfläche von Laschen ausgebildet werden. Es können geometrisch komplexe Bereiche der Laschen, insbesondere an Kanten und Vertiefungen, zugänglichen Hohlräumen oder Bohrungen gleichmäßig beschichtet werden.

Die Verschleiß- und Korrosionsbeständigkeit von Nickel-Phosphat-Beschichtungen kann mit dem jeweiligen Phosphorgehalt beeinflusst werden. Dies kann mit der Zusammensetzung des Elektrolyten bei einer stromlosen Abscheidung beeinflusst werden. Es sollten Schichtdicken im Bereich 2 µm bis 50 µm eingehalten sein.

Als Grundwerkstoffe für Nickel-phosphatierbare Laschen eignen sich alle niedrig legierten ferritischen Stähle oder ggf. auch Sintermetalle.

Die erforderliche Oberflächengüte der aus ta-C bestehenden Beschichtungen kann durch mechanische Nachbearbeitung realisiert werden. Dazu kann eine Einebnung der Oberfläche mit Hilfe eisenhaltiger Elemente, die entlang der jeweiligen Oberfläche unter Einfluss vorgebbarer Druckkräfte gegen die ta-C-Schichtoberfläche erreicht werden. Die eisenhaltigen Elemente können beispielsweise bürstenförmig ausgebildet sein und bei einer Rotation die Stirnflächen der Elemente die Oberfläche der ta-C-Beschichtung einebnen, bis die geforderte Oberflächengüte erreicht worden ist.

Es kann auch eine Oberflächenbearbeitung der ta-C-Beschichtungen erfolgen, bei denen zwei Reibpartner, die an Oberflächen mit einer diamantähnlichen Beschichtung versehen sind, eingesetzt werden. Zumindest einer der Reibpartner ist dabei eine jeweilige Hülse oder Rolle. Ein konkretes Vorgehen dazu, kann man der nachfolgenden Beschreibung eines Ausführungsbeispiels entnehmen.

Mit Einsatz der Erfindung kann der Wirkungsgrad des Antriebs eines Zweirades verbessert und somit Kraftstoffverbrauch und CO₂-Ausstoß reduziert werden. Die Lebensdauer von Verschleißteilen kann erhöht und der Verbrauch an Schmiermittel reduziert werden, was zu einer Betriebskostensenkung führt. Außerdem entfällt der Pflege- und Wartungsaufwand des jeweiligen Nutzers, was seine Lebensqualität und sein zur Verfügung stehendes Freizeitvolumen erhöht.

Diese Vorteile können mit einer erfindungsgemäßen Antriebsanordnung erreicht werden, bei der lediglich die bestimmten Oberflächen der Hülsen und Rollen einer Kette mit ta-C beschichtet und die ta-C-Beschichtungen an ihren Oberflächen geglättet worden sind.

Nachfolgend soll die Erfindung näher erläutert werden.

Bei der zur Antriebsanordnung gehörenden Kette handelt es sich im Wesentlichen um eine herkömmliche Kette, wie sie für den Einsatz an Zweirädern üblich ist. Dies trifft sowohl auf die Gestaltung und Dimensionierung der einzelnen die Kette bildenden Elemente, wie auch auf die Werkstoffe zu, aus denen diese Elemente gebildet sind. So sind Bolzen, Hülsen, Rollen und Laschen üblicherweise aus einem Stahl hergestellt. Die Oberflächen der Bolzen, Hülsen und Rollen sind mechanisch bearbeitet und dabei geglättet worden.

Bei der Erfindung werden auch herkömmliche Ritzel und Kettenräder für den An- und Abtrieb genutzt.

Die bei der Erfindung einsetzbaren Hülsen und Rollen bilden dabei eine Art von Halbzeugen und werden als Schüttgut im grob gereinigten Zustand und leicht eingefettet angeliefert. Im Vorfeld der Ausbildung der ta-C-Beschichtungen werden die Arbeitsgänge Entfettung, Ultraschall-unterstützte Nassreinigung im alkalischen Bad und Spülen in deionisiertem Wasser, unmittelbar gefolgt von einer Trocknung im Heißluftofen durchgeführt.

Zum Einbau in eine PVD-Beschichtungsanlage erfolgt die Aufnahme der Rollen und Hülsen auf Stangen, wobei sich die Anzahl der Rollen bzw. Hülsen nach der maximalen Beschichtungshöhe der Anlage richtet. Die Stangen mit den aufgestapelten Rollen bzw. Hülsen werden in eine Position auf einen Halter eines Drehkorbs der Beschichtungsanlage eingebaut, so dass sie sich während der Beschichtung in Dreifachrotation befinden.

Die Beschichtung in der PVD-Anlage beginnt nach Abpumpen auf einen hinreichend kleinen Startdruck im Hochvakuumbereich mit einem Plasmaätzen, bei dem mit Argon-Ionen eine Entfernung von Oberflächenverunreinigung, Bedeckungs- und Oxidschichten auf den Oberflächen der Hülsen und Rollen erreicht werden. Diesem Prozess schließt sich die Abscheidung einer metallischen Haftvermittlerschicht, in der Regel Chrom, an. Diese Schicht wird mittels eines Vakuumlichtbogen- oder Sputterprozesses aufgebracht. Die Schichtdicke sollte etwa 0,2 µm betragen. Schließlich folgt im nächsten Schritt die Aufbringung einer ta-C-Beschichtung mittels Vakuumbogen-Verdampfen von Graphit. Die Technik der Vakuumbogen-Verdampfung kann eine einfache elektrische Gleichstrombogentechnik oder eine gepulst betriebene elektrische Lichtbogentechnik sein. Letztgenannte kann vorzugsweise über eine lasergezündete elektrische Lichtbogentechnik (Laser-Arc-Verfahren) für die Ausbildung der ta-C-Beschichtungen auf den äußeren Oberflächen der Hülsen und Rollen eingesetzt werden.

Die Schichtdicke der ta-C-Beschichtungen sollte zwischen 0,5 µm und 10 µm, vorzugsweise 2,5 µm auf den Rollen und 5 µm auf den Hülsen eingehalten sein. Die Beschichtungen sind jeweils homogene ta-C Schichten, die eine Härte von vorzugsweise 50 GPa -70 GPa aufweisen sollten.

Nach der Beschichtung erfolgt vorzugsweise eine mechanische Glättung der mit ta-C beschichteten Teile, um die prozessbedingte Rauheit der ta-C Schicht zu mindern. Dazu kann vorzugsweise eine Schüttgut-Glättung durchgeführt werden.

Dabei werden die mit einer ta-C-Beschichtung versehenen Hülsen und/oder Rollen allein oder mit einer dementsprechenden ta-C-Schichten versehenen Werkzeugen zusammen in eine Trommel, die bevorzugt mit Mitnehmern an einer Trommelwand ausgebildet ist, eingegeben. Die geschlossene Trommel wird dann um ihre horizontale Längsachse gedreht. Dabei wird eine Temperatur von 20° C eingehalten und es wird ein Anpressdruck von 0,5 N/mm² genutzt.

Durch die Rotation der Trommel kommt es zu einer Schüttgutbewegung der als lose Schüttung ausgeführten Menge an Hülsen und/oder Rollen und ggf. der Werkzeuge in der Trommel und damit zu Relativbewegungen der Hülsen und/oder Rollen mit den ggf. in der Trommel enthaltenen Werkzeuge an den mit der ta-C-Beschichtung versehenen Oberflächen. Dies führt zu einem gegenseitigen Entfernen von Rauheitsspitzen auf den Oberflächen der ta-C-Beschichtungen. Nach einer hinreichend langen Zeit von ca. 15 Minuten wird die Rotation beendet und die Trommel geöffnet. Die an den mit den ta-C-Beschichtungen versehenen sowie ggf. die Werkzeuge können dann aus der Trommel entnommen werden. Die äußeren Oberflächen der so bearbeiteten Hülsen und Rollen weisen eine deutlich reduzierte Rauheit R_{z} von 0,5 µm auf. Es konnte eine Rₐ-Rauheit von0,05 µm erreicht werden. Ein ggf. entstandener Abrieb kann durch Spülen mit einer geeigneten Lösung, beispielsweise einem wässrigen Medium als Reinigungsmedium entfernt werden. Dieses Spülen kann sowohl während der Oberflächenbearbeitung in der Trommel als auch als separater Verfahrensschritt nach Beenden der Oberflächenbearbeitung und der Entfernung der Hülsen und/oder Rollen aus der Trommel durchgeführt werden.

Eine Glättung kann auch durch eine oszillierende lineare Bewegung oder eine chaotische Bewegung ohne vorgegebenes Muster erfolgen.

Die ta-C-Beschichtungen können Vertiefungen oder Erhebungen aufweisen, die durch harte Kohlenstoffpartikel, die bei der Ausbildung der jeweiligen ta-C-Beschichtungen mittels des Vakuumlichtbogenverfahrens ausgebildet werden. Die harten Kohlenstoffpartikel können beim Glätten aus der jeweiligen ta-C-Beschichtung herausgebrochen werden und es verbleibt dort eine Vertiefung als Defekt. Die jeweilige(n) Vertiefung(en) weisen durchschnittlich eine Breite von 1 µm auf.

Das Verfahren der Oberflächenglättung kann ohne Zugabe von Hilfsstoffen durchgeführt werden, es ist aber auch möglich, ein Eisenpulver in die Trommel und bzw. oder auf eine Außenoberfläche der ta-C-Beschichtungen aufzubringen, um durch eine chemisch-katalytische Wirkung des Eisens die Glättung zu unterstützen.

Eine Nickel-Phosphat-Schicht auf Oberflächen von Laschen kann wie folgt beschrieben ausgebildet werden:
Bei dem Verfahren zur Herstellung einer metallischen Beschichtung durch stromlose Abscheidung werden die zu beschichtenden Laschen einer Kette in einen wässrigen Elektrolyten eingetaucht, der Nickelkationen und Phosphinationen enthält. Der Anteil an Nickelkationen in dem Elektrolyten kann zwischen 79 Masse-% und 97 Masse und der Anteil an Phosphinationen in dem Elektrolyten kann zwischen 2 Masse-% und 15 Masse-% gehalten sein. Es können auch kleine Anteile von Antimon- und Bismutionen enthalten sein.

Die Nickelionen werden dabei zu reinem Nickel reduziert. Mit Hypophosphitlonen, die im Verlauf zu Orthophosphit reduziert werden kann sich eine Beschichtung auf der Oberfläche der Laschen bilden, die mit einer Nickel-Phosphor-Legierung gebildet ist. Die Herstellung solcher Beschichtungen ist an sich bekannt und wird von der Firma AHC-Oberflächentechnik GmbH & Co. OHG mit Sitz in Kerpen DE unter Bezeichnung "Durni-Coat" als Durnicoatieren kommerziell angeboten.

## Patentansprüche

1. Antriebsanordnung für ein Zweirad, bei der eine geschlossene Kette um ein Antriebsritzel und ein Kettenrad für den Abtrieb geführt ist und die Kette mit Bolzen, auf denen jeweils eine um die mittlere Längsachse des jeweiligen Bolzes drehbare Hülse und auf den Hülsen jeweils eine Rolle, die um die Hülse drehbar angeordnet und mit einem Spiel behaftet ist, sowie an zwei gegenüberliegenden Stirnseiten, die Bolzen mit Laschen jeweils miteinander verbunden sind gebildet ist; wobei die äußere Oberfläche der Hülsen und der Rollen jeweils mit einer Beschichtung aus reinem ta-C beschichtet sind und in den Beschichtungen keine weiteren chemischen Elemente, bis auf die herstellungsbedingt bei einem PVD-Verfahren, mit dem die Beschichtungen ausgebildet worden sind, unvermeidbaren Spurenelemente, enthalten sind; und
an der Oberfläche der Beschichtungen eine Rₐ-Rauheit zwischen 0,03 µm und 0,2 µm und/oder eine R_{z}-Rauheit zwischen 0,3 µm bis 2 µm eingehalten ist; **dadurch gekennzeichnet, dass** die mit den Rollen der Kette in Kontakt stehenden Oberflächen des Ritzels und des Kettenrades keine Beschichtung aus diamantähnlichem Kohlenstoff aufweisen und
die Schichtdicke der ta-C-Beschichtung auf der äußeren Oberfläche von Hülsen größer als auf den äußeren Oberflächen von Rollen ist.

2. Antriebsanaordnung nach Anspruch 1, **dadurch gekennzeichnet, dass** an der Oberfläche der Beschichtungen eine Rₐ-Rauheit zwischen 0,05 µm und 0,15 µm, und/oder eine R_{z}-Rauheit zwischen 0,5 µm und 1,5 µm, eingehalten ist.

3. Antriebsanordnung nach einem der vorhergehenden Ansprüche, **dadurch gekennzeichnet, dass** die Schichtdicke der ta-C-Beschichtung auf der äußeren Oberfläche von Hülsen mindestens zweifach größer als auf den äußeren Oberflächen von Rollen ist.

4. Antriebsanaordnung nach einem der vorhergehenden Ansprüche, **dadurch gekennzeichnet, dass** zwischen den stirnseitigen Enden der Hülsen und den an den Bolzen angreifenden Laschen jeweils ein Dichtring, auf den jeweiligen Bolzen aufgeschoben, angeordnet ist und die Dichtringe mit einer reibungsmindernden außenseitigen Beschichtung versehen sind oder aus einem reibungsmindernden Werkstoff gebildet sind.

5. Antriebsanordnung nach dem vorhergehenden Anspruch, **dadurch gekennzeichnet, dass** eine reibungsmindernde Beschichtung oder ein reibungsmindernder Werkstoff PTFE ist.

6. Antriebsanordnung nach einem der vorhergehenden Ansprüche, **dadurch gekennzeichnet, dass** zwischen den äußeren Oberflächen der Bolzen, den inneren Oberflächen der Hülsen und den Dichtringen ein Festschmierstoff enthalten ist.

7. Antriebsanordnung nach einem der vorhergehenden Ansprüche, **dadurch gekennzeichnet, dass** die Oberflächen der Laschen mit einer vor Korrosion und Verschleiß schützenden Beschichtung versehen oder der Werkstoff der Laschen im oberflächennahen Bereich so modifiziert ist, wobei eine Beschichtung nicht mit diamantähnlichem Kohlenstoff gebildet ist.

8. Antriebsanordnung nach dem vorhergehenden Anspruch, **dadurch gekennzeichnet, dass** die Oberfläche der vor Korrosion und Verschleiß schützenden Beschichtung mit Stickstoff, Bor, oder Phosphor oder modifiziert oder die vor Korrosion und Verschleiß schützende Beschichtung mit einer Nitrid- oder Phosphatverbindung, insbesondere mit Nickelphosphat oder gebildet ist.

## Claims

1. A drive arrangement for a two-wheeler, in which a closed chain is guided around a drive pinion and a sprocket for the output and the chain is formed having bolts, on each of which a sleeve rotatable about the central longitudinal axis of the respective bolt and on each of the sleeves a roller which is rotatably arranged around the sleeve and is subject to play, and on two opposite end faces, the bolts are each connected to one another via tabs; the outer surface of the sleeves and the rollers each being coated with a coating of pure ta-C and no further chemical elements being present in the coatings, apart from the trace elements that are unavoidable due to the manufacturing method in a PVD process with which the coatings were formed; and
an Rₐ roughness between 0.03 µm and 0.2 µm and/or an R_{z} roughness between 0.3 µm and 2 µm being maintained on the surface of the coatings; **characterized in that** the surfaces of the pinion and the sprocket in contact with the rollers of the chain do not have a coating of diamond-like carbon and
the layer thickness of the ta-C coating on the outer surface of sleeves is greater than that on the outer surfaces of rollers.

2. The drive arrangement according to claim 1, **characterized in that** an Rₐ roughness between 0.05 µm and 0.15 µm and/or an R_{z} roughness between 0.5 µm and 1.5 µm is maintained on the surface of the coatings.

3. The drive arrangement according to any one of the preceding claims, **characterized in that** the layer thickness of the ta-C coating on the outer surface of sleeves is at least twice greater than on the outer surfaces of rollers.

4. The drive arrangement according to any one of the preceding claims, **characterized in that** a sealing ring, pushed onto the respective bolt, is arranged between the frontal ends of the sleeves and the tabs engaging the bolts, and the sealing rings are provided with a friction-reducing outer coating or are formed from a friction-reducing material.

5. The drive arrangement according to the preceding claim, **characterized in that** a friction-reducing coating or a friction-reducing material is PTFE.

6. The drive arrangement according to any one of the preceding claims, **characterized in that** a solid lubricant is present between the outer surfaces of the bolts, the inner surfaces of the sleeves and the sealing rings.

7. The drive arrangement according to any one of the preceding claims, **characterized in that** the surfaces of the tabs are provided with a coating protecting against corrosion and wear or the material of the tabs is modified in the near-surface region, wherein a coating is not formed with diamond-like carbon.

8. The drive arrangement according to the preceding claim, **characterized in that** the surface of the coating protecting against corrosion and wear is modified with nitrogen, boron, or phosphorus or the coating protecting against corrosion and wear is formed with a nitride or phosphate compound, particularly with nickel phosphate.

## Revendications

1. Dispositif d'entraînement pour un deux-roues, pour lequel une chaîne fermée est guidée autour d'un pignon d'entraînement et d'une roue à chaîne pour l'entraînement de sortie et la chaîne est formée avec des tourillons, sur lesquels respectivement un manchon pouvant tourner autour de l'axe longitudinal central du tourillon respectif et sur les manchons, respectivement un rouleau, qui est disposé de manière à pouvoir tourner autour du manchon et présentant un jeu, et sur deux faces frontales opposées, les tourillons sont reliés respectivement entre eux avec des éclisses ; dans lequel la surface extérieure des manchons et des rouleaux est revêtue respectivement d'un revêtement de ta-C pur et aucun autre élément chimique n'est contenu dans les revêtements, à l'exception des éléments traces inévitables inhérents à la fabrication dans un procédé PVD, avec lequel les revêtements ont été réalisés ; et
une rugosité Rₐ comprise entre 0,03 µm et 0,2 µm et/ou une rugosité R_{z} comprise entre 0,3 µm et 2 µm est maintenue à la surface des revêtements ; **caractérisé en ce que** les surfaces du pignon et de la roue à chaîne en contact avec les rouleaux de la chaîne ne présentent pas de revêtement en carbone de type diamant, et
l'épaisseur de couche du revêtement en ta-C sur la surface extérieure des manchons est plus grande que sur les surfaces extérieures des rouleaux.

2. Dispositif d'entraînement selon la revendication 1, **caractérisé en ce qu'**une rugosité Rₐ comprise entre 0,05 µm et 0,15 µm, et/ou une rugosité R_{z}comprise entre 0,5 µm et 1,5 µm est maintenue à la surface des revêtements.

3. Dispositif d'entraînement selon l'une quelconque des revendications précédentes, **caractérisé en ce que** l'épaisseur de couche du revêtement en ta-C sur la surface extérieure des manchons est au moins deux fois plus grande que sur les surfaces extérieures des rouleaux.

4. Dispositif d'entraînement selon l'une quelconque des revendications précédentes, **caractérisé en ce qu'**une bague d'étanchéité est disposée à chaque fois entre les extrémités avant des manchons et les éclisses agissant sur les tourillons, poussée sur le tourillon respectif, et les bagues d'étanchéité sont pourvues d'un revêtement extérieur réduisant le frottement ou sont formées d'un matériau réduisant le frottement.

5. Dispositif d'entraînement selon la revendication précédente, **caractérisé en ce qu'**un revêtement réduisant le frottement ou un matériau réduisant le frottement est du PTFE.

6. Dispositif d'entraînement selon l'une quelconque des revendications précédentes, **caractérisé en ce qu'**un lubrifiant solide est contenu entre les surfaces extérieures des tourillons, les surfaces intérieures des manchons et les bagues d'étanchéité.

7. Dispositif d'entraînement selon l'une des revendications précédentes, **caractérisé en ce que** les surfaces des éclisses sont pourvues d'un revêtement protégeant contre la corrosion et l'usure ou le matériau des éclisses est modifié de la sorte dans la zone proche de la surface, dans lequel un revêtement n'est pas formé de carbone de type diamant.

8. Dispositif d'entraînement selon la revendication précédente, **caractérisé en ce que** la surface du revêtement protégeant contre la corrosion et l'usure est modifiée avec de l'azote, du bore ou du phosphore ou le revêtement protégeant contre la corrosion et l'usure est formé avec un composé de nitrure ou de phosphate, en particulier avec du phosphate de nickel.
